# EUROPEAN PATENT SPECIFICATION

(11) **EP 2 647 790 B1**
(45) Date of publication and mention of the grant of the patent: **22.10.2014**
(21) Application number: 11290611.0
(22) Date of filing: 23.12.2011
(51) Int. Cl.: E21B 47/08, G01B 7/13, G01B 21/04

(54) **Calibrator for a downhole caliper and method of using same**
Kalibriereinrichtung für einen Bohrlochmessschieber und Verfahren zu deren Verwendung
Étalonneur pour compas de trou de forage et son procédé d'utilisation

(43) Date of publication of application: 09.10.2013
(73) Proprietor: Services Pétroliers Schlumberger, 75007 Paris (FR); Schlumberger Technology B.V., 2514 JG The Hague (NL); Schlumberger Holdings Limited, Tortola BV1 (VG); PRAD Research and Development Limited, Road Town, Tortola (VG)
(72) Inventor: Mouget, Pierre, 92310 Sèvres (FR)
(74) Representative: Rzaniak, Martin

(56) References cited:
- WO-A1-02/37052
- US-A- 3 345 857
- US-A- 4 302 881

## Description

### BACKGROUND

This invention relates generally to techniques for performing downhole investigations. More specifically, the invention relates to techniques, such as calipers, for measuring wellbore parameters, such as wellbore shape.

Oilfield operations may be performed to locate and gather valuable downhole fluids. Oil rigs may be positioned at wellsites and drilling tools advanced therefrom into the earth on drill strings to reach subsurface reservoirs. During or after drilling, casings may be cemented into place within the wellbore, and the wellbore completed to enable production of fluids from the reservoir. Tubing or pipes may be positioned in the wellbore to enable the passage of subsurface fluids to the surface.

During various wellbore operations, it may be desirable to measure various parameters of the wellbore, such as wellbore shape (e.g., diameter, curvature, offset, etc.) The shape of the wellbore may be used in determining, for example, the ability to pass tools therethrough, deformities of the wellbore, and/or other factors which may affect wellbore operations. Devices, such as calipers, may be positioned on a downhole tool and extended therefrom for contact with a wall of the wellbore. A sensor may be linked to the caliper for collecting measurements of the caliper.

US 3,345,857 describes a calibration gauge for use in calibrating a borehole caliper tool having multiple arms adapted to extend outwardly from the body of the tool to contact the borehole side wall. The guage includes a central hub formed with an opening adapted to slide and fit over the body of the tool, multiple sets of gauging members, and support means for the gauging members to be fixed relative to the central hub. Each of the arms has a corresponding support member, and each support member has gauging means at the same radial distance from the centerline of the hub opening. The radial distance from the centerline of the opening to each set is different.

WO 2002/37052 describes a downhole caliper system utilizing a linear or arcuate magneto-resistive sensor to determine the position of one or more caliper arms which extend from a carrier tool to touch the surface of a borehole wall. A processor and firmware are included to calculate and plot the borehole radius. Magneto-resistive sensors are provided to calculate the sine, cosine, and tangent for accurate motion of each independent arm. The magneto-resistive sensors sense the position of a precise magnetic ruler linked to the caliper arm. The position of the caliper arm determines the radius of the borehole

US 4,302,881 describes a well conduit caliper tool which simultaneously measures the remaining wall thickness of a well conduit in situ and the minimum inside diameter of such conduit. A caliper feeler arm element which extends out from the caliper tool activates a sensing element that produces the indication of remaining conduit wall thickness. Another caliper feeler arm element which extends out from the caliper tool activates another sensing element that produces the indication of the minimum inside diameter. These indications are recorded on a continuous strip chart or log as the variation of such respective diameters through the interval of conduit measured by the caliper tool.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

The disclosure relates to a caliper of a downhole tool used for measuring wellbore shape, and a calibrator for calibrating the caliper. The calibrator includes a calibration ring with multiple steps positionable adjacent an arm of the caliper. The caliper ring may be floatable for alignment along a central axis of the downhole tool. A sensor may collect measurements made by the caliper at each of the steps of the calibration ring. Caliper measurements may be taken before and after insertion of the caliper into the wellbore. Such caliper measurements may be used for evaluation of, for example, temperature, wear and other conditions which may affect measurement error. The caliper and/or the caliper measurements may be adjusted based on the evaluation.

### BRIEF DESCRIPTION DRAWINGS

Embodiments of the wellbore caliper and method are described with reference to the following figures. The same numbers are used throughout the figures to reference like features and components.
Figure 1 is a schematic view illustrating measurement of a wellbore by a caliper.
Figure 2 is a schematic view of a wellsite having a downhole tool deployed into a wellbore, the downhole tool having a caliper.
Figure 3 is a longitudinal cross-sectional view of a downhole tool having a caliper and a calibrator.
Figures 4A-4C are perspective, longitudinal cross-sectional and exploded views, respectively, of a calibrator.
Figures 5A-5D are front perspective, front end, first longitudinal cross-sectional (taken along line 5C-5C of Figure 5B), and second longitudinal cross-sectional (taken along line 5D-5D of Figure 5B) views, respectively, of an outer ring of the calibrator of Figure 4A.
Figure 6A-6D are perspective, end, exploded, and longitudinal cross-sectional (taken along line 6D-6D of Figure 6B) views, respectively, of another calibrator.
Figures 7A-7D are rear perspective, front end, first longitudinal cross-sectional(taken along line 7C-7C of Figure 7B), and second longitudinal cross-sectional (taken along line 7D-7D of Figure 7B) views, respectively, of an outer ring of the calibrator of Figure 6A.
Figure 8 is a flow chart depicting a method of measuring wellbore parameters.

### DETAILED DESCRIPTION OF THE INVENTION

The description that follows includes exemplary apparatus, methods, techniques, and instruction sequences that embody techniques of the present inventive subject matter. However, it is understood that the described embodiments may be practiced without these specific details.

The disclosure relates to a caliper deployable into a wellbore on a downhole tool. A calibration ring is positionable on the downhole tool for calibrating the caliper. The calibration ring has a plurality of steps of known dimension for calibrating the caliper at various measurement positions. The calibration ring may also have a self-centering mechanism for alignment along an axis of the downhole tool. Calibrations may be performed before and after deploying the downhole tool into the wellbore for evaluation of the caliper and its measurements.

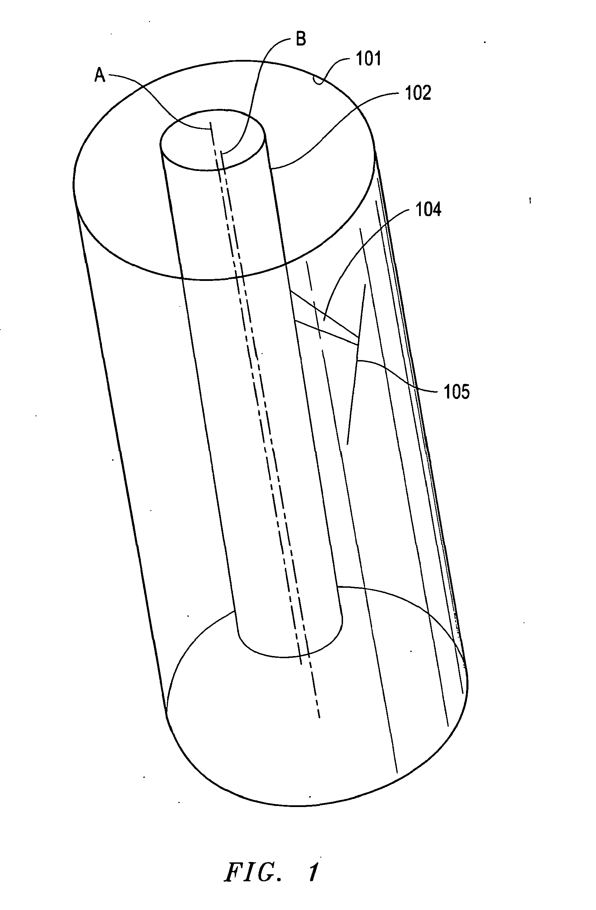

Figure 1 schematically depicts a wellbore 101 with a downhole tool 102 positioned therein. The downhole tool 102 has a caliper arm 104 extending therefrom for measuring the wellbore 101 along a path 105. While one caliper arm 104 is depicted, multiple caliper arms 104 may extend radially about the downhole tool 102 for measuring the wellbore 101.

The downhole tool 102 has an axis A extending therethrough, and the wellbore 101 has an axis B extending therethrough. Axis A.is misaligned with respect to axis B. As demonstrated by this schematic view, misalignment between the downhole tool 102 and the wellbore 101 (as indicated by the misaligned axes A and B) may result in movement of the caliper 104 along an offset route in the wellbore 101. Measurements taken by the caliper 104 under these misaligned conditions may result in a measurement error. Calibrations may be performed to detect, adjust and/or account for at least a portion of such measurement error. In particular, calibrations may be performed to axially align the caliper 104 with an axis of a calibrator (and the downhole tool 102) to reduce misalignment therebetween as will be described further herein.

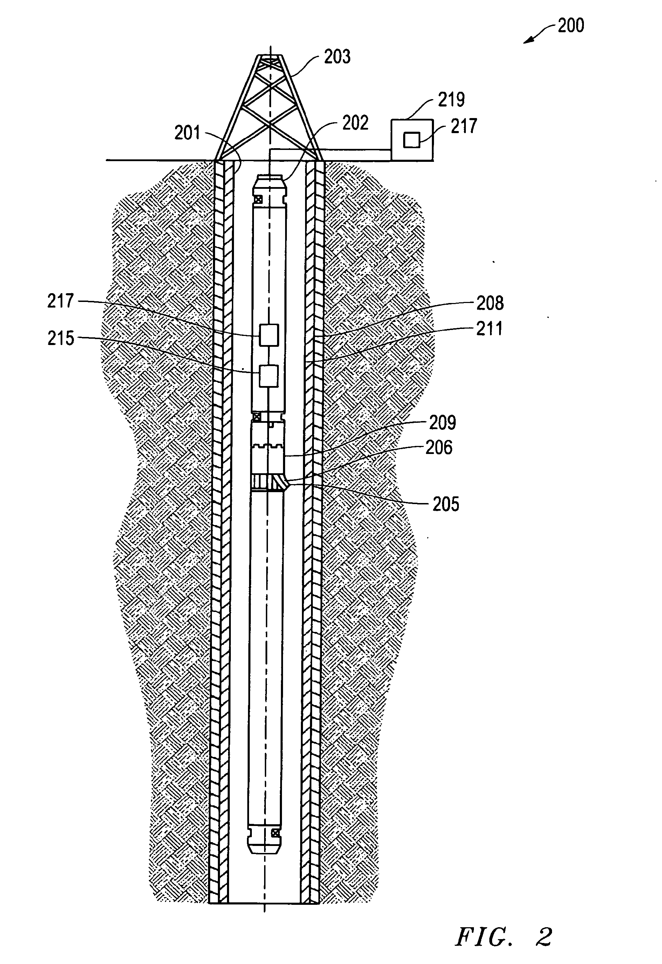

Figure 2 depicts a schematic view of a wellsite 200 having a downhole tool 202 deployed from a rig 203 into a wellbore 201. The wellbore 201 has a casing 208 cemented therein. The downhole tool 202 has a caliper 205 positionable thereon. While the wellsite 200 depicts the caliper 205 on a wireline tool disposed in a land based rig, it will be appreciated that the caliper system 205 may be used with any downhole tool (e.g., testing, drilling, coiled tubing, etc.) on a water or land-based rig. The caliper arm 206 and downhole tool 202 may be a conventional downhole tool and caliper, such as described in US Patent Application No. 4559709.

The caliper 205 of Figure 2 demonstrates an example of a caliper that may be used, for example, in the oil industry to obtain measurements for various purposes, such as in an open hole well geometry before a cementing job, in open hole diameters to localize washout, in an open hole diameter combined with logging tools for data correction and presentation, in a cased hole diameter combined with a spinner for flow rate evaluation, in a cased hole diameter for corrosion survey or scale build up, etc. The caliper arms 206 may also be used, for example, to measure the internal dimensions of the casing 208 (or other surface).

The caliper 205 includes caliper arms 206 extendable from an outer surface 209 of the downhole tool 202 for engagement with a wall 211 in the wellbore 201. Caliper arm(s) 206 may be positioned, for example, on decentralized equipment (such as an FSI™ tool commercially available from SCHLUMBERGER™) or on centralized equipment (wellbore imagers like FMI™, PFCS-A™, GHOS-A™ commercially available from SCHLUMBERGER™).

The caliper 205 may have one or more sensing caliper arms (or fingers) 206 to gauge the wall 211 of the wellbore 201 and/or to measure wellbore shape (e.g., diameter, curvature, offset, etc.) Multiple caliper arms 206 may be spaced about the downhole tool on a support to measure multiple radii. The caliper 205 may be used, for example, to measure a diameter of portions of the wellbore 201 directly by linking mechanically opposite caliper arms 206.

The caliper arms 206 may be pressed against the wall 211 and linked to a sensor 215, such as a transducer, by a lever or cams to provide a signal proportional to an extension of the caliper arm 206. For calibration, selected rings may be used to establish a relation between known diameter of the rings and sensor output from the caliper. An assumption may be made that response of the sensor 215 is linear and that mechanical clearances in the mechanical linkage are small enough to be included in the overall error budget. In some cases, caliper arms may be independent and/or have accuracy requirements. In such cases, radius measurements may have an error limit of up to about 0.025" (0.635 mm) on radius measurement. Measurements may be collected and/or processed by a processor 217 positioned in the downhole tool and/or a surface unit 219.

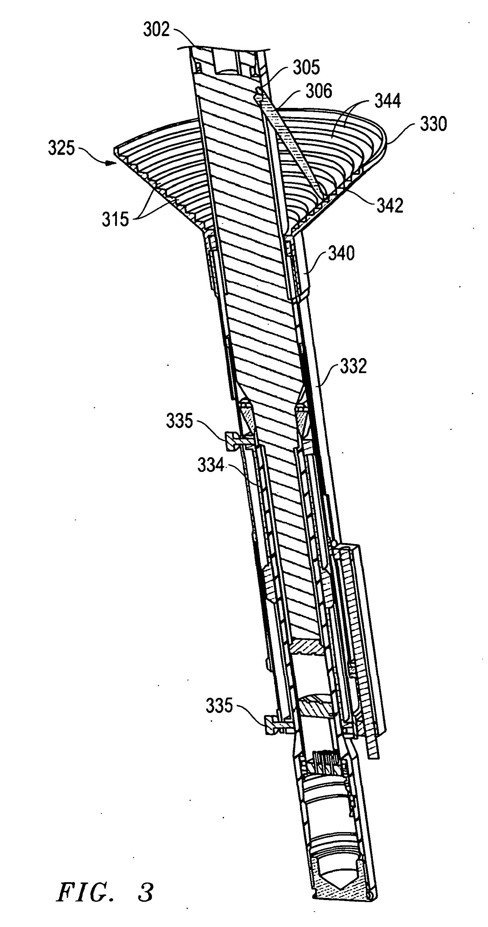

Figure 3 depicts an embodiment of a caliper 305 usable as the caliper 205 of Figure 2, and a calibrator 325 usable therewith. For explanation purposes, caliper 305 is depicted as having a single caliper arm 306 extendable from a downhole tool 302, but any number of caliper arms may be used for taking measurements as previously described.

The calibrator 325 includes a calibration ring 330 having a floating ring 340, an outer sleeve 332 and an inner sleeve 334. The inner sleeve 334 may be fixedly positionable about the downhole tool 302. Connectors 335, such as bolts, may be used to secure the sleeves in position about the downhole tool 302. The outer sleeve 332 may be slidably positionable over an outer surface of the downhole tool 302 for extension and retraction relative to caliper arm 306.

The calibration ring 330 has an end securable to the outer sleeve 332 for slidable movement therewith, and a caliper portion 342 for engagement with caliper arm 306. The end receivingly engages an end of the outer sleeve 332. The caliper portion 342 has a funnel shape extending outward from the end. The caliper portion 342 has a plurality of steps 344 along an inner surface thereof for receiving the caliper arm 306. The plurality of steps 344 each has a known internal diameter along the calibration ring 330.

The steps 344 of the calibration ring 330 may be machined with concentric diameters. Each of the steps 344 may be defined by a groove 315. The groove 315 may have, for example, a trapezoidal or triangular shape for receivingly engaging a tip of the caliper arm. The calibration ring 330 may be axially displaced such that the calibration arm 306 is pressed against the steps 344 and into the grooves 315. The calibration ring 330 may be selectively positioned at various axial positions along the downhole tool 302 for positioning the calibration arm at different steps 344.

In this version of the calibrator 325, the calibration ring 330 with grooves 315 may be used to make actual measurement of a position of the caliper arm 306. The calibration ring 330 may be fixed, with the floating ring 340 having a small diameter floating thereabout. The floating ring 340 is equipped with different grooves 315 for establishing a reference measurement for the smallest diameter by displacing the calibration ring 330 axially.

The caliper arm 306 may be positioned in front of a smallest diameter of the calibration ring 330. The smallest diameter of the calibration ring 330 nearest the floating ring 340 has the same diameter as the floating ring 340. Because the calibration ring is fixed rigidly on the downhole tool 302, measurement of the caliper arm 306 may change by eccentralization, or tilting of displacement axis. These measurements may be used to calculate correction factors for eliminating the effects of eccentralization and tilt, and for application to other diameters machined on the calibration ring 330.

Multiple measurements may be taken with the floating ring 340 added to the calibration ring 330. One ring with two internal diameters or two independent rings may be used. When all calibration arms 306 of a multi finger caliper are in a step 344 of the calibration ring 330, the calibration ring 330 may be in equilibrium and its center is confused with an axis of the downhole tool 302. The axis of the downhole tool 302 may be defined by an intersection of all the caliper arms displacement planes. Additional measurements may be taken using other diameters defined by various steps 344, or with another ring. These measurements may be used to compute sensor gain.

The caliper arms 306 may be positioned adjacent to the smallest diameter of the calibration ring 330 adjacent the floating ring with the caliper arms 306 pressed into position by springs of the caliper 305, and measurements recorded. The measurements in this position may be affected by misalignment of the calibrator 325 with respect to the tool axis. The caliper arms may be nearly located along an ellipse. Since the caliper arms are not exactly identical, an angular displacement may exist between the calipers. These data may be fitted on the ellipse and the result of the fitting used to compute, for example, a distance between the axis of the calibrator and the axis of the downhole tool, orientation of a plane parallel to the downhole tool axis and a plane parallel to the axis of the calibrator, an angle within the plane between the axis of the calibrator and the axis of the downhole tool. Using this information, measurements for each caliper arm position and each calibration ring may be corrected by using its center offset and tilt angle.

While Figure 3 depicts a calibrator 335 with a calibration ring 330.with a floating ring 340 at an end thereof, other variations of a calibrator may be used. For example, a floating ring may be provided with multiple diameters machined therein, a set of independent floating rings with one diameter per ring, or a combination using various numbers of different diameters for each floating ring.

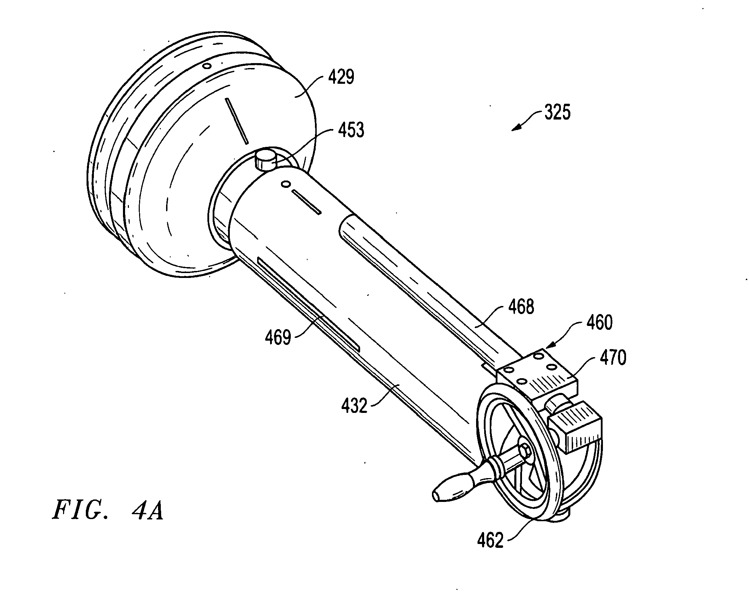

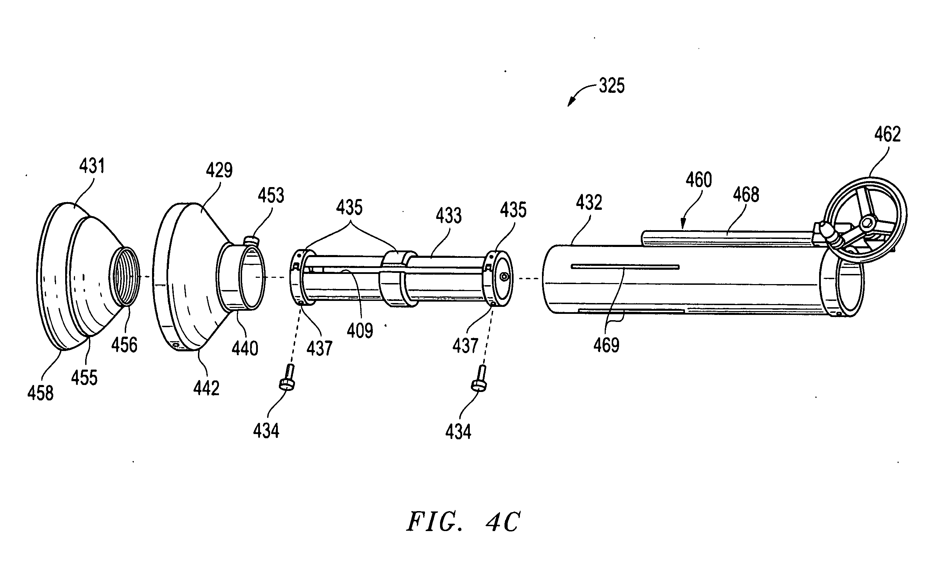

Figures 4A-5D depict a calibrator 325 with an independent floating ring configuration usable as the calibration assembly 325 of Figure 3. This configuration uses a guiding and suspension device to permit the floating ring to tilt and move in a plane normal to the axis of the downhole tool. The calibrator 325 includes an outer calibration ring 429, an inner calibration ring 431, an outer sleeve 432 and an inner sleeve 433.

The inner sleeve 433 may be fixedly positionable about the downhole tool. The inner sleeve 433 may have raised portions 435 at either end thereof, as well as in a central portion thereof. The raised portions 435 on each end have holes 437 for receiving connectors 434, such as bolts, that may be used to secure the sleeves in position about the downhole tool (e.g., 202 of Fig. 2). A channel 439 extends along a length thereof between the raised portions 435 on each end. The outer sleeve 432 may be slidably positionable relative to the fixed inner sleeve 433.

A gear 460 and a crank 462 form an adjuster for slidably moving the outer sleeve 432 relative to inner sleeve 433. The gear 460 is positioned on an outer surface of the outer sleeve 432. The crank 462 may be, for example, a rotatable wheel for driving the gear 460 to extend and retract the outer sleeve 432. The gear 460 may include, for example, a rack 468 for engaging a pinion 470 positioned along the outer surface of the outer sleeve 432. The outer sleeve 432 may be provided with slots 469 therethrough for facilitating movement of the outer sleeve 432.

The outer ring 429 may be secured to the outer sleeve 432 by a connector 453, such as a bolt. The outer ring 429 has a sleeve portion 440 securable to the outer sleeve 432 for slidable movement therewith, and a ring portion 442 extending from the sleeve portion 440. The sleeve portion 440 has a tubular shape for receivingly engaging an end of the outer sleeve 432. The caliper portion 442 has a funnel shape extending outward from the sleeve portion 440 for receiving the floating ring 431. The caliper portion 442 has a support 454 along an inner periphery thereof adjacent a caliper end of the outer ring 429.

The floating ring 431 is floatingly supported in the outer ring 429 by the support 454. The floating ring 452 has a frustoconical shape extending from a tool end 456 to a caliper end 458. The floating ring 452 has a ring shoulder 455 on an outer surface thereof for engaging the support 454. The tool end 456 of the floating ring 452 is positionable about a downhole tool, and the caliper end 458 is positionable adjacent a caliper arm (see, e.g., Figure 3). The floating ring 431 has a plurality of steps 444 along an inner surface thereof for receiving a caliper arm. Steps 444 may have a depth Dₛ of from about 5 to about 15mm, and diameters θᵢ and θₒ ranging from 2" to about 14" (from about 5.08 cm to about 35.56 cm). The diameter variations may be provided within a single floating ring 431, or by replacing the floating ring 431 with another of a different diameter.

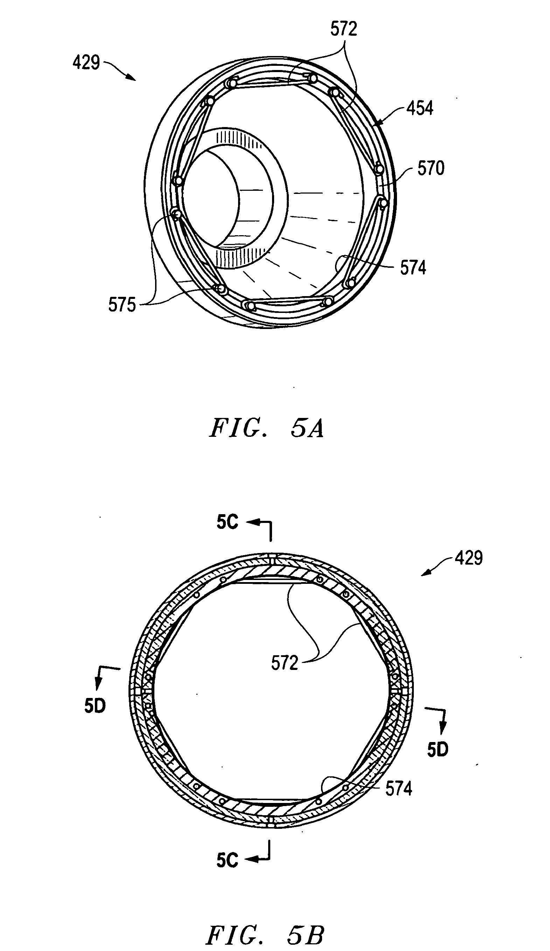

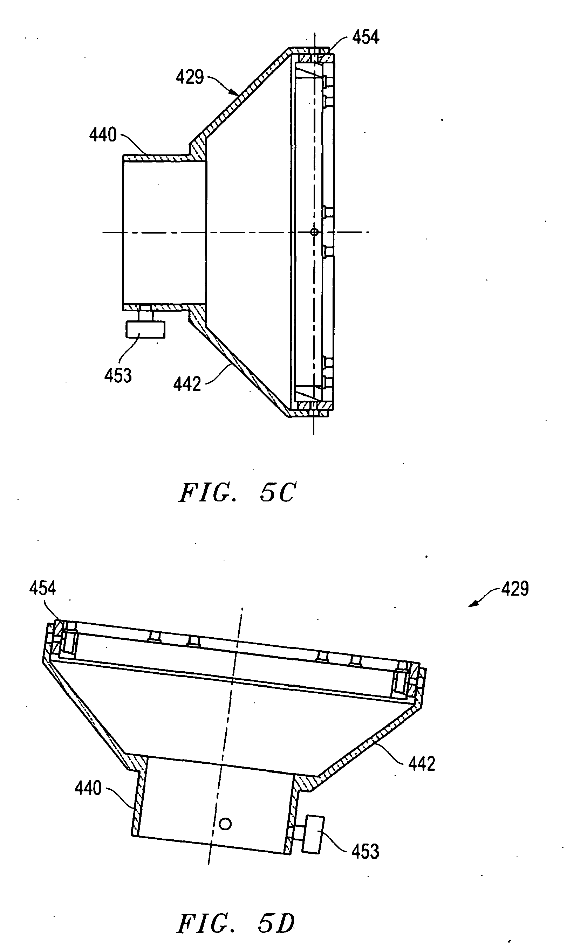

The outer ring 429 and support 454 are shown in greater detail in Figures 5A-5D. As shown in these views, the support 554 includes a support shoulder 570 with multiple springs (or bands) 572 thereon. The support shoulder 554 defines an edge along an inner periphery of the outer ring 450 for receivingly engaging the ring shoulder 455 of the floating ring 431.

The springs 572 may be made of elastomeric or other flexible materials for flexibly engaging the floating ring 452. As shown, six springs 572 are positioned along the support shoulder 570 for defining a polygonal receptacle 574. The springs 572 are depicted as elastomeric bands secured between two pins 575. Various numbers of flexible members may be provided at various ranges of flexibility for providing the desired flexibility in supporting the floating ring 452.

The springs 572 and ring shoulder 570 may be configured to allow the floating ring 431 to float within the outer ring 450. This floating movement may be used to adjust the position of the floating ring 431 within the outer ring 429 such that, when in position along the downhole tool and in engagement with the caliper arm (see, e.g., Figure 3), the floating ring 429 may axially align therewith. The floating ring 431 may be supported such that it may move in a direction normal to the axis of the downhole tool. This axial alignment may be used to prevent and/or adjust for misalignments.

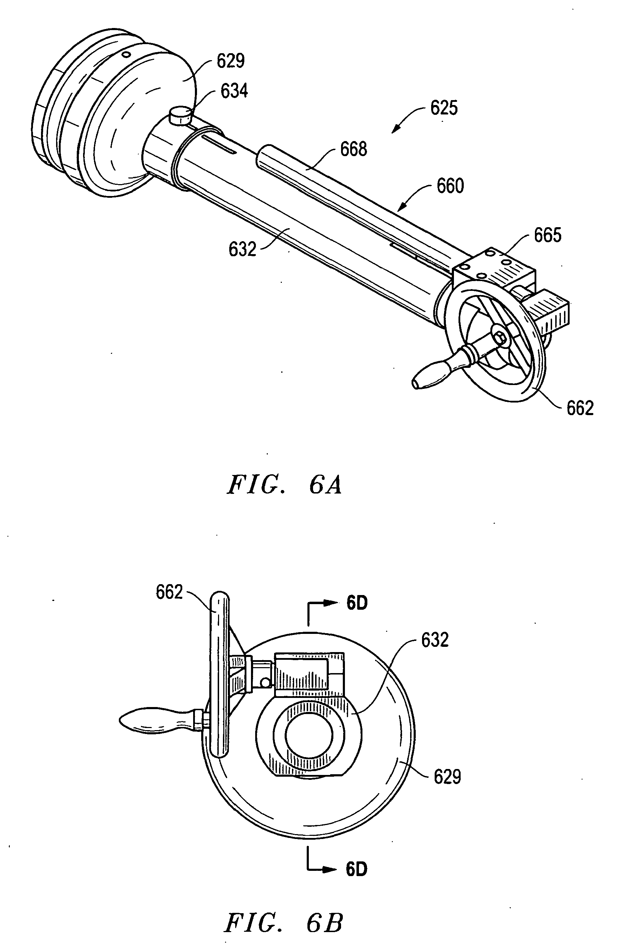

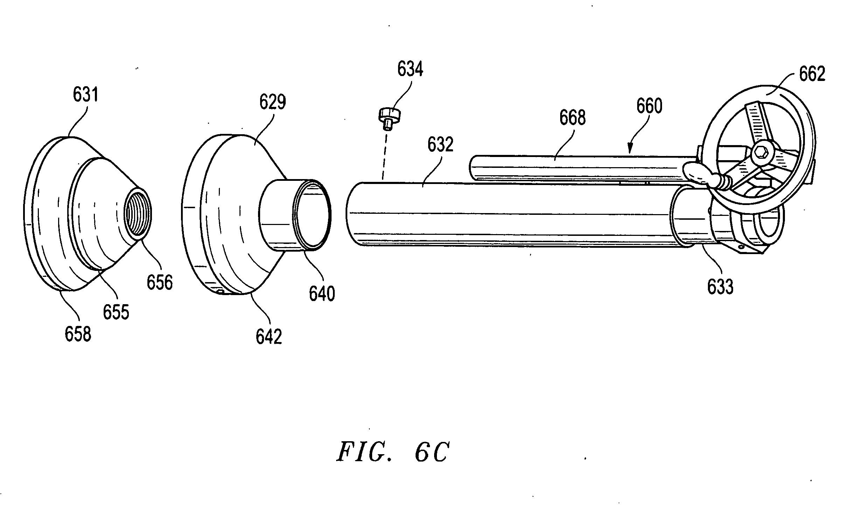

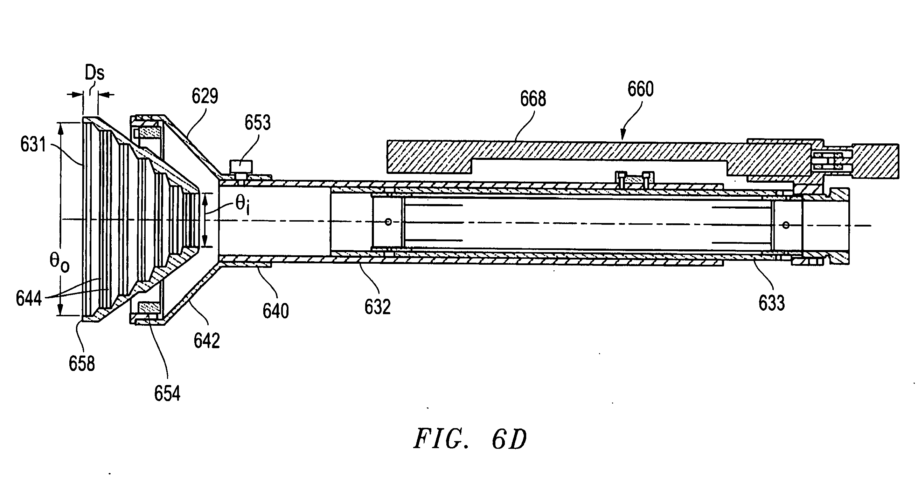

Figures 6A-7D depict another version of a calibrator 625 usable as the calibration assembly 325 of Figure 3. The calibrator includes an outer (or outer calibration) ring 629, a floating (or inner calibration) ring 631, an outer sleeve 632 and an inner sleeve 633.

The inner sleeve 633 may be fixedly positionable about the downhole tool. The inner sleeve 633 may be positioned within the outer sleeve 633 for telescopic movement therebetween. The outer sleeve 632 may be slidably positionable relative to the fixed inner sleeve 633 for extension and retraction therefrom.

A gear 660 and a crank 662 may provide for slidably moving of the outer sleeve 632 relative to inner sleeve 633. The gear 660 is positioned on an outer surface of the outer sleeve 632. The crank 662 may be, for example, a rotatable wheel for driving the gear 660 to extend and retract the outer sleeve 632. The gear 660 may include, for example, a rack 668 for engaging a pinion 665 positioned along the outer surface of the outer tube 632.

The outer ring 629 may be secured to the outer sleeve 632 by a bolt 634. The outer ring 629 has a sleeve portion 640 securable to the outer sleeve 632 for slidable movement therewith, and a ring portion 642 extending from the sleeve portion 640. The sleeve portion 640 has a tubular shape for receivingly engaging an end of the outer sleeve 632. The ring portion 642 has a funnel shape extending outward from the sleeve portion 640 for receiving the floating ring 631. The ring portion 642 has a support 654 along an inner periphery thereof adjacent a caliper end of the outer ring 629.

The floating ring 631 is floatingly supported in the outer ring 629 by the support 654. The floating ring 631 has a frustoconical shape extending from a tool end 656 to a caliper end 658. The floating ring 631 has a ring shoulder 655 on an outer surface thereof for engaging the support 654. The tool end 656 of the floating ring 631 is positionable about a downhole tool, and the caliper end 658 is positionable adjacent a caliper arm (see, e.g., Figure 3). The floating ring 631 has a plurality of steps 644 along an inner surface thereof for receiving a caliper arm. Steps 644 may have a depth Dₛ of from about 5 to about 15mm, and diameters θᵢ and θₒ ranging from 2" to about 14" (from about 5.08 cm to about 35.56 cm). The diameter variations may be provided within a single floating ring 631, or by replacing the floating ring 631 with another of a different diameter.

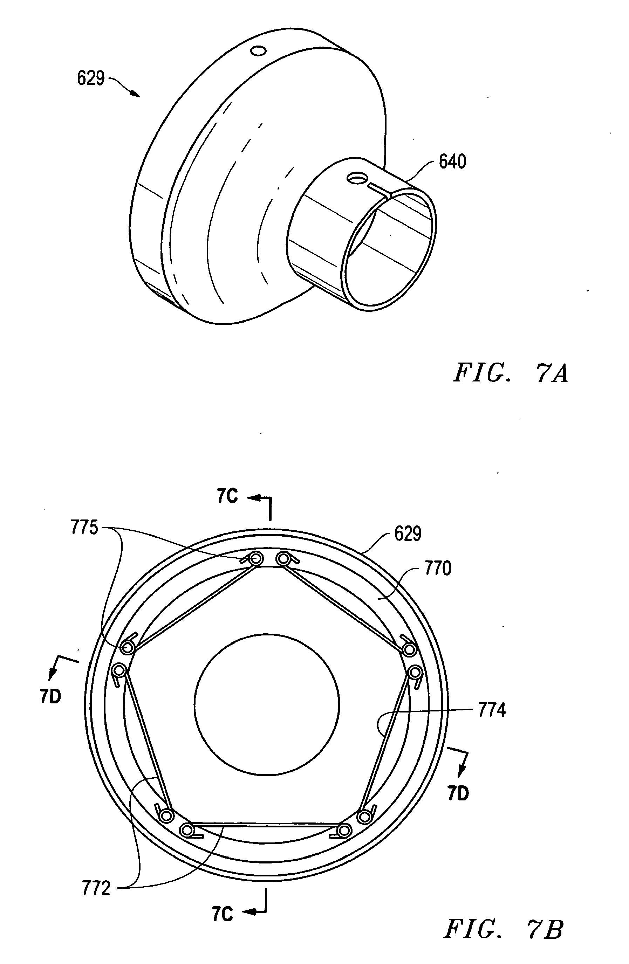

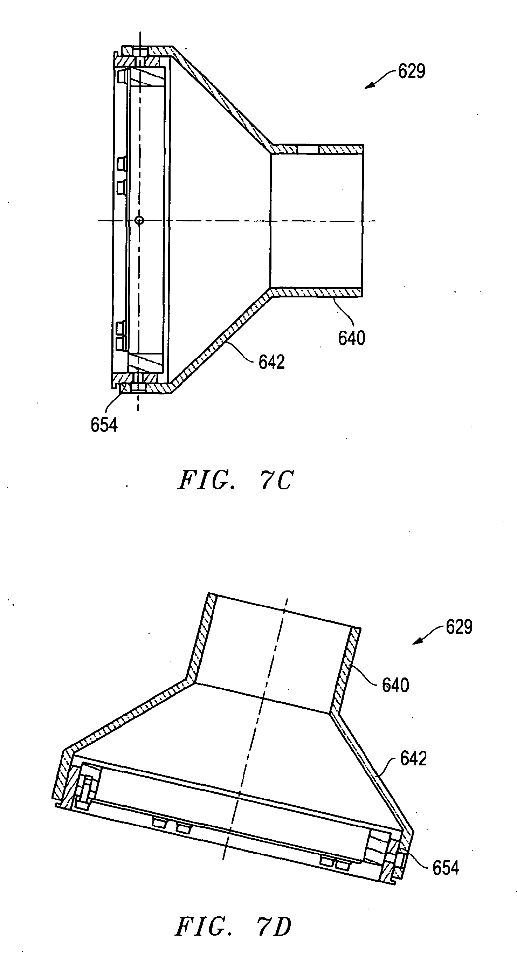

The outer ring 629 and support 654 are shown in greater detail in Figures 7A-7D. As shown in these views, the support 654 includes a support shoulder 770 with multiple springs (or bands) 772 thereon. The support shoulder 770 defines an edge along an inner periphery of the outer ring 629for receivingly engaging the ring shoulder 655 of the floating ring 631.

The springs 772 may be made of elastomeric or other flexible materials for flexibly engaging the floating ring 631. As shown, five springs 772 are positioned along the support shoulder 770 for defining a polygonal receptacle 774. The springs 772 are depicted as elastomeric bands secured between two pins 775. Various numbers of flexible members may be provided at various ranges of flexibility for providing the desired flexibility in supporting the floating ring 631.

The springs 772 and support shoulder 770 may be configured to allow the floating ring 631 to float within the outer ring 629. This floating movement may be used to adjust the position of the floating ring 631 within the outer ring 629 such that, when in position along the downhole tool and in engagement with the caliper arm (see, e.g., Figure 3), the floating ring 631 may axially align therewith. This axial alignment may be used to prevent and/or adjust for misalignments.

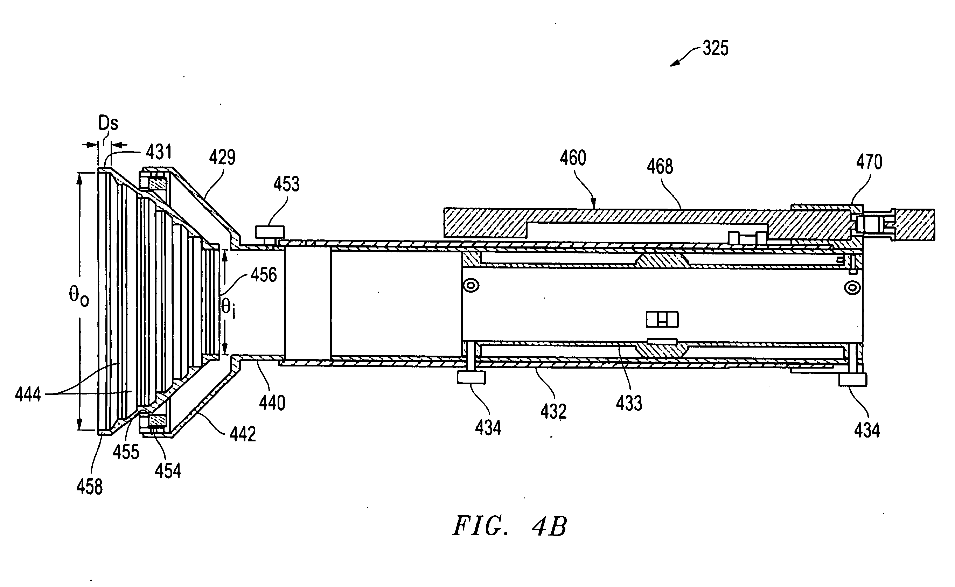

While Figures 3-7D depict various views of calipers with one or two rings, one or more floating, concentric rings may be provided. The rings may be uncoupled from other rings to allow independent references for correcting a position of calibration system axis with respect to actual tool axis (see, e.g., X of Figure 4B). Measurements of the caliper with different diameters may be corrected using a true calibration axis position.

For calibration, the selected rings may be used to establish a relation between known diameter of the rings and sensor output from the caliper. An assumption may be made that the sensor response is linear and that mechanical clearances in the mechanical linkage meet operational limitations.

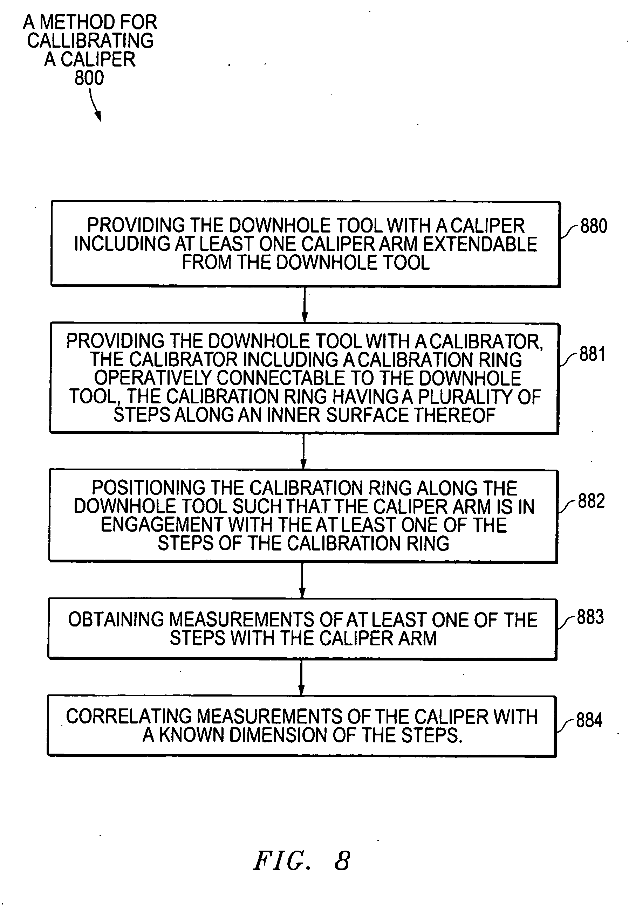

Figure 8 is a flow chart depicting a method (800) for calibrating a caliper of a downhole tool (see, e.g., Figure 1). The method involves providing (880) the downhole tool with a caliper including at least one caliper arm extendable from the downhole tool and providing (881) the downhole tool with a calibrator (the calibrator includes a calibration ring operatively connectable to the downhole tool and has a plurality of steps along an inner surface thereof) (see, e.g., Figures 3-7D).

The method 800 further involves positioning (882) the calibration ring along the downhole tool such that the caliper arm is in engagement with the steps of the calibration ring, and obtaining (883) measurements of at least one of the steps with the caliper arm. The calibrator may be used to perform a reference calibration at, for example, a laboratory prior to use of the downhole tool at the wellsite to obtain a reference calibration. The laboratory calibration measurement may be taken at a high temperature to simulate downhole conditions. A map of sensor measurements at each step of the calibration ring may be taken.

The method 800 may further involve correlating (884) measurements of the caliper with a known dimension of the steps. The sensor output may also be normalized to temperature, against calibration data and/or other selected parameters. The sensor output may be adjusted based on the correlations. Another calibration measurement may be taken at the rig at ambient temperatures with the downhole tool prior to insertion into the wellbore. Sensor outputs for the caliper may be offset and/or corrected. After performing downhole operations, a post-operation calibration measurement may be taken for confirmation.

Each of the measurements taken by the caliper may be analyzed and/or interpreted, and adjustments made to the operation and/or caliper as necessary. For example, measurements may indicate wear on the caliper arms, and replacements may be provided. The effects of gravity or friction may be assumed negligible in the analysis of the measurements.

In an example operation, the caliper arms may be placed in front of a calibration ring, part of the set of calibration rings, and attached to the displacement system. The first measurement has a diameter identical to one of the floating rings. The caliper arms may be pressed against the calibration ring by their own springs and measurements recorded. In these conditions, the caliper arm reading may be affected by misalignment of the calibration system with respect to the tool axis (see, e.g., Fig. 1). In such cases, the caliper arm may nearly locate along an ellipse. This may be an approximation where angular displacement of each caliper arm may not exactly be identical. These data may be fitted on an ellipse, and the results of the fitting used to compute the distance between an axis of the calibrator and an axis of the tool. The data may also be fitted to an orientation of a plane parallel to the tool axis and parallel to the axis of the calibration system, the angle within the plane being defined between the axis of the calibration system and the tool axis. Using the calibration axis, measurements for each caliper arm position may be corrected for each calibration ring by using its center offset and tilt angle.

Another method to detect the position of the calibration tool axis involves taking five independent measurements along the wellbore by displacing it axially. An ellipse may be fitted on each set of the five measurements taken for each caliper arm and, by computation, also provides the parameters.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the claims.

## Claims

1. A calibrator (325) for calibrating a caliper (305) of a downhole tool (302) positionable in a wellbore (101, 201) penetrating a subterranean formation, the caliper (104, 205, 305) having at least one caliper arm (306) extendable from the downhole tool (302) for taking measurements, **characterized in that** the calibrator (325) further comprises:
a floating ring (431, 631) having a plurality of steps (444, 644) along an inner surface thereof for receivingly engaging the caliper (305), each of the plurality of steps defining a known diameter;
an outer ring (429, 629) having a support (454, 770) on an inner periphery thereof for receivably engaging the floating ring (431, 631) for providing floating movement of the floating ring (431, 631) therein, the outer ring (429, 629) operatively connectable to the downhole tool (302) and positionable therealong such that at least one of the plurality of steps (444,644) of the floating ring (431, 631) is positionable in engagement with the at least one caliper arm (306) whereby the measurements of the at least one caliper arm (306) may be correlated to a known diameter of the at least one of the plurality of steps.

2. The calibrator of Claim 1, further comprising a processor (217) for correlating the measurements of the at least one caliper arm (306) to the known diameter of the at least one of the plurality of steps.

3. The calibrator of Claim 1 or 2, further comprising at least one tubular sleeve (432, 632, 433, 633) for operatively connecting the outer ring (429, 629) to the downhole tool (302).

4. The calibrator of Claim 3, wherein the tubular sleeve comprises an inner tube (433, 633) operatively fixedly connectable to the downhole tool (302) and an outer tube (432, 632) slidably positionable relative to the inner tube (433, 633).

5. The calibrator of Claim 4, further comprising an adjuster (460, 660) for slidably moving the outer tube (432, 632) relative to the inner tube (433, 633).

6. The calibrator of Claim 5, wherein the adjuster comprises a gear (460, 660) positionable along the outer tube (432, 632) and a crank (462, 662) for selectively activating the gear.

7. The calibrator of any of Claims 3-6, wherein the outer ring (429, 629) has a tube end for receiving an end of the at least one tubular sleeve (432, 632, 433, 633).

8. The calibrator of any of Claims 3-7, further comprising a connector (453) for operatively connecting the outer ring (429, 629) to the at least one tubular sleeve (432, 632, 433, 633).

9. The calibrator of any preceding Claim, wherein the support (454, 770) comprises a shoulder (570, 770) and a plurality of springs (472, 772).

10. The calibrator of Claim 9, wherein the plurality of springs (472, 772) defines a polygonal receptacle (574, 774) for receivingly engaging the floating ring (431, 631).

11. The calibrator of Claim 9 or 10, wherein the plurality of springs (472, 772) comprises an elastomer (572, 772) extended between a pair of connectors (575, 775) operatively connected to the shoulder.

12. A downhole tool (302) positionable in a wellbore (201) penetrating a subterranean formation, the downhole tool comprising:
a housing (209);
at least one caliper (205) operatively connectable to the housing, the at least one caliper comprising at least one caliper arm (206) extendable from the downhole tool for engaging a wall (211) of the wellbore (201);
a caliper sensor (215) for measuring a position of the at least one caliper; and
the calibrator (325) of claim 1, wherein the calibrator (325) is operatively connectable to the housing

13. The downhole tool of Claim 12, further comprising a processor (217) for correlating the measurements of the caliper (305) with the position of the calibration ring (330).

14. A method for calibrating a caliper (305) of a downhole tool (302) positionable in a wellbore (201) penetrating a subterranean formation, the method comprising:
providing (880) the downhole tool with a caliper (305) comprising at least one caliper arm (206) extendable from the downhole tool (302); and
**characterized in that** the method further comprises:
providing (881) the downhole tool with a calibrator (325), comprising:
a floating ring (431, 631) having a plurality of steps along an inner surface thereof for receivingly engaging the caliper (305), each of the plurality of steps defining a known diameter;
an outer ring (429, 629) having a support on an inner periphery thereof for receivably engaging the floating ring (431, 631) for providing floating movement of the floating ring (431, 631) therein, the outer ring (429, 629) operatively connectable to the downhole tool (302) and positionable therealong;
positioning (882) the calibration ring (330) along the downhole tool (302) such that the at least one caliper arm (206) is in engagement with the plurality of steps of the calibration ring (330);
obtaining (883) measurements of the at least one caliper arm(206) at the at least one of the plurality of steps; and
correlating (884) measurements of the caliper (305) with a known diameter of the plurality of steps.

15. The method of Claim 14, further comprising obtaining a reference measurement at a surface location.

16. The method of Claim 14 or 15, further comprising adjusting a temperature of the downhole tool (302).

17. The method of any of Claims 14-16, further comprising performing obtaining measurements before and/or after deploying the downhole tool (302) into the wellbore (101, 201).

18. The method of any of Claims 14-17, further comprising adjusting the caliper (305) based on the correlating.

19. The method of any of Claims 14-18, further comprising analyzing the measurements.

## Patentansprüche

1. Kalibrator (325) zum Kalibrieren eines Messtasters (305) eines Bohrlochwerkzeugs (302), das in einem Bohrloch (101, 201), das in eine unterirdische Formation eindringt, positionierbar ist, wobei der Messtaster (104, 205, 305) mindestens einen Tastarm (306) besitzt, der von dem Bohrlochwerkzeug (302) zum Nehmen von Messungen ausziehbar ist, **dadurch gekennzeichnet, dass** der Kalibrator (325) ferner umfasst:
einen gleitenden Ring (431, 631) mit mehreren Stufen (444, 644) entlang einer seiner inneren Flächen, um mit dem Messtaster (305) aufnehmend ineinanderzugreifen, wobei jede der mehreren Stufen einen bekannten Durchmesser definiert;
einen äußeren Ring (429, 629) mit einer Stütze (454, 770) auf seinem inneren Umfang, um mit dem gleitenden Ring (431, 631) aufnehmend ineinanderzugreifen, um eine gleitende Bewegung des gleitenden Rings (431, 631) darin zu schaffen, wobei der äußere Ring (429, 629) mit dem Bohrlochwerkzeug (302) betriebstechnisch verbindbar ist und entlang diesem so positionierbar ist, das mindestens eine der Stufen (444, 644) des gleitenden Rings (431, 631) mit dem mindestens einen Tastarm (306) in Eingriff positionierbar ist, wodurch die Messungen des mindestens einen Tastarms (306) mit einem bekannten Durchmesser der mindestens einen der mehreren Stufen korreliert sein kann.

2. Kalibrator nach Anspruch 1, der ferner einen Prozessor (217) umfasst, um die Messungen des mindestens einen Tastarms (306) mit dem bekannten Durchmesser der mindestens einen der mehreren Stufen zu korrelieren.

3. Kalibrator nach Anspruch 1 oder 2, der ferner mindestens eine röhrenförmige Hülse (432, 632, 433, 633) umfasst, um den äußeren Ring (429, 629) mit dem Bohrlochwerkzeug (302) betriebstechnisch zu verbinden.

4. Kalibrator nach Anspruch 3, wobei die röhrenförmige Hülse eine innere Röhre (433, 633), die mit dem Bohrlochwerkzeug (302) betriebstechnisch fest verbindbar ist, und eine äußere Röhre (432, 632), die in Bezug auf die innere Röhre (433, 633) gleitend positionierbar ist, umfasst.

5. Kalibrator nach Anspruch 4, der ferner einen Anpasser (460, 660) umfasst, um die äußere Röhre (432, 632) in Bezug auf die innere Röhre (433, 633) gleitend zu bewegen.

6. Kalibrator nach Anspruch 5, wobei der Anpasser einen Antrieb (460, 660), der entlang der äußeren Röhre (432, 632) positionierbar ist, und eine Kurbel (462, 662), um den Antrieb selektiv zu betätigen, umfasst.

7. Kalibrator nach einem der Ansprüche 3-6, wobei der äußere Ring (429, 629) ein Röhrenende zum Aufnehmen eines Endes der mindestens einen röhrenförmigen Hülse (432, 632, 433, 633) besitzt.

8. Kalibrator nach einem der Ansprüche 3-7, der ferner ein Verbindungselement (453) umfasst, um den äußeren Ring (429, 629) mit der mindestens einen röhrenförmigen Hülse (432, 632, 433, 633) betriebstechnisch zu verbinden.

9. Kalibrator nach einem vorhergehenden Anspruch, wobei die Stütze (454, 770) eine Schulter (570, 770) und mehrere Federn (472, 772) umfasst.

10. Kalibrator nach Anspruch 9, wobei die mehreren Federn (472, 772) einen polygonförmigen Behälter (574, 774) definieren, um mit dem gleitenden Ring (431, 631) aufnehmend ineinanderzugreifen.

11. Kalibrator nach Anspruch 9 oder 10, wobei die mehreren Federn (472, 772) ein Elastomer (572, 772) umfassen, das sich zwischen einem Paar Verbindungselementen (575, 775) erstreckt, die mit der Schulter betriebstechnisch verbunden sind.

12. Bohrlochwerkzeug (302), das in einem Bohrloch (201), das in eine unterirdische Formation eindringt, positionierbar ist, wobei das Bohrlochwerkzeug umfasst:
ein Gehäuse (209);
mindestens einen Messtaster (205), der mit dem Gehäuse betriebstechnisch verbindbar ist, wobei der mindestens eine Messtaster
mindestens einen Tastarm (206) umfasst, der von dem Bohrlochwerkzeug ausziehbar ist, um mit einer Wand (211) des Bohrlochs (201) in Eingriff zu gelangen;
einen Messtastersensor (215) zum Messen einer Position des mindestens einen Messtasters; und
den Kalibrator (325) nach Anspruch 1, wobei der Kalibrator (325) mit dem Gehäuse betriebstechnisch verbindbar ist.

13. Bohrlochwerkzeug nach Anspruch 12, das ferner einen Prozessor (217) umfasst, um die Messungen des Messtasters (305) mit der Position des Kalibrierungsrings (330) zu korrelieren.

14. Verfahren zum Kalibrieren eines Messtasters (305) eines Bohrlochwerkzeugs (302), das in einem Bohrloch (201), das in eine unterirdische Formation eindringt, positionierbar ist, wobei das Verfahren umfasst:
Bereitstellen (880) des Bohrlochwerkzeugs mit einem Messtaster (305), der mindestens einen Tastarm (206) umfasst, der von dem Bohrlochwerkzeug (302) ausziehbar ist; und
**dadurch gekennzeichnet, dass** das Verfahren ferner umfasst:
Bereitstellen (881) des Bohrlochwerkzeugs mit einem Kalibrator (325), das umfasst:
einen gleitenden Ring (431, 631) mit mehreren Stufen entlang einer seiner inneren Flächen, um mit dem Messtaster (305) aufnehmend ineinanderzugreifen, wobei jede der mehreren Stufen einen bekannten Durchmesser definiert;
einen äußeren Ring (429, 629) mit einer Stütze auf seinem inneren Umfang, um mit dem gleitenden Ring (431, 631) aufnehmend ineinanderzugreifen, um eine gleitende Bewegung des gleitenden Rings (431, 631) in ihm zu liefern, wobei der äußere Ring (429, 629) mit dem Bohrlochwerkzeug (302) betriebstechnisch verbindbar und an ihm entlang positionierbar ist;
Positionieren (882) des Kalibrierungsrings (330) entlang dem Bohrlochwerkzeug (302), so dass der mindestens eine Tastarm (206) mit den mehreren Stufen des Kalibrierungsrings (330) in Eingriff gelangt;
Erhalten (883) von Messungen des mindestens einen Tastarms (206) an der mindestens einen der mehreren Stufen; und
Korrelieren (884) der Messungen des Messtasters (305) mit einem bekannten Durchmesser der mehreren Stufen.

15. Verfahren nach Anspruch 14, das ferner umfasst, eine Referenzmessung an einem Oberflächenort zu erhalten.

16. Verfahren nach Anspruch 14 oder 15, das ferner umfasst, eine Temperatur des Bohrlochwerkzeugs (302) anzupassen.

17. Verfahren nach einem der Ansprüche 14-16, das ferner umfasst, das Erhalten von Messungen vor und/oder nach dem Anbringen des Bohrlochwerkzeugs (302) in dem Bohrloch (101, 201) auszuführen.

18. Verfahren nach einem der Ansprüche 14-17, das ferner umfasst, den Messtaster (305) aufgrund der Korrelation anzupassen.

19. Verfahren nach einem der Ansprüche 14-18, das ferner umfasst, die Messungen zu analysieren.

## Revendications

1. Etalonneur (325) pour calibrer un compas (305) d'un outil de fond (302) pouvant être positionné dans un puits foré (101, 201) pénétrant dans une formation souterraine, le compas (104, 205, 305) ayant au moins un bras de compas (306) extensible à partir de l'outil de fond (302) pour prendre des mesures, **caractérisé en ce que** l'étalonneur (325) comprend en outre :
un anneau flottant (431, 631) ayant une pluralité d'échelons (444, 644) le long de sa surface interne pour mettre en prise par réception le compas (305), chacun de la pluralité d'échelons définissant un diamètre connu ;
un anneau externe (429, 629) ayant un support (454, 770) sur sa périphérie interne pour mettre en prise par réception l'anneau flottant (431, 631) pour fournir le mouvement flottant de l'anneau flottant (431, 631) à l'intérieur de ce dernier, l'anneau externe (429, 629) pouvant être raccordé de manière opérationnelle à l'outil de fond (302) et positionné le long de ce dernier de sorte qu'au moins l'un de la pluralité d'échelons (444, 644) de l'anneau flottant (431, 631) peut être positionné en mise en prise avec le au moins un bras de compas (306), moyennant quoi les mesures du au moins un bras de compas (306) peuvent être corrélées par rapport à un diamètre connu du au moins un de la pluralité d'échelons.

2. Etalonneur selon la revendication 1, comprenant en outre un processeur (217) pour mettre en corrélation les mesures du au moins un bras de compas (306) avec le diamètre connu du au moins un de la pluralité d'échelons.

3. Etalonneur selon la revendication 1 ou 2, comprenant en outre au moins un manchon tubulaire (432, 632, 433, 633) pour raccorder de manière opérationnelle l'anneau externe (429, 629) à l'outil de fond (302).

4. Etalonneur selon la revendication 3, dans lequel le manchon tubulaire comprend un tube interne (433, 633) pouvant être raccordé de manière opérationnellement fixe à l'outil de fond (302) et un tube externe (432, 632) pouvant être positionné de manière coulissante par rapport au tube interne (433, 633).

5. Etalonneur selon la revendication 4, comprenant en outre un ajusteur (460, 660) pour déplacer de manière coulissante le tube externe (432, 632) par rapport au tube interne (433, 633).

6. Etalonneur selon la revendication 5, dans lequel l'ajusteur comprend un engrenage (460, 660) pouvant être positionné le long du tube externe (432, 632) et une manivelle (462, 662) pour activer de manière sélective l'engrenage.

7. Etalonneur selon l'une quelconque des revendications 3 à 6, dans lequel l'anneau externe (429, 629) a une extrémité de tube pour recevoir une extrémité du au moins un manchon tubulaire (432, 632, 433, 633).

8. Etalonneur selon l'une quelconque des revendications 3 à 7, comprenant en outre un connecteur (453) pour raccorder de manière opérationnelle l'anneau externe (429, 629) au au moins un manchon tubulaire (432, 632, 433, 633).

9. Etalonneur selon l'une quelconque des revendications précédentes, dans lequel le support (454, 770) comprend un épaulement (570, 770) et une pluralité de ressorts (472, 772).

10. Etalonneur selon la revendication 9, dans lequel la pluralité de ressorts (472, 772) définit un réceptacle polygonal (574, 774) pour mettre en prise par réception l'anneau flottant (431, 631).

11. Etalonneur selon la revendication 9 ou 10, dans lequel la pluralité de ressorts (472, 772) comprend un élastomère (572, 772) étendu entre une paire de connecteurs (575, 775) raccordée de manière opérationnelle à l'épaulement.

12. Outil de fond (302) pouvant être positionné dans un trou foré (201) pénétrant dans une formation souterraine, l'outil de fond comprenant :
un boîtier (209) ;
au moins un compas (205) pouvant être raccordé de manière opérationnelle au boîtier, le au moins un compas comprenant au moins un bras de compas (206) extensible à partir de l'outil de fond pour mettre en prise une paroi (211) du trou foré (201) ;
un capteur de compas (215) pour mesurer une position du au moins un compas ; et
l'étalonneur (325) selon la revendication 1, dans lequel l'étalonneur (325) peut être raccordé de manière opérationnelle au boîtier.

13. Outil de fond selon la revendication 12, comprenant en outre un processeur (217) pour corréler les mesures du compas (305) avec la position de l'anneau d'étalonnage (330).

14. Procédé pour étalonner un compas (305) d'un outil de fond (302) pouvant être positionné dans un trou foré (201) pénétrant dans une formation souterraine, le procédé comprenant l'étape consistant à :
prévoir (880) l'outil de fond avec un compas (305) comprenant au moins un bras de compas (206) extensible à partir de l'outil de fond (302) ; et
**caractérisé en ce que** le procédé comprend en outre les étapes consistant à :
prévoir (881) l'outil de fond avec un étalonneur (325) comprenant :
un anneau flottant (431, 631) ayant une pluralité d'échelons le long de sa surface interne pour mettre en prise par réception le compas (305), chacun de la pluralité d'échelons ayant un diamètre connu ;
un anneau externe (429, 629) ayant un support sur sa périphérie interne pour mettre en prise par réception l'anneau flottant (431, 631) pour fournir le mouvement flottant de l'anneau flottant (431, 631) à l'intérieur de ce dernier, l'anneau externe (429, 629) pouvant être raccordé de manière opérationnelle à l'outil de fond (302) et positionné le long de ce denier ;
positionner (882) l'anneau d'étalonnage (330) le long de l'outil de fond (302) de sorte que le au moins un bras de compas (206) est en prise avec la pluralité d'échelons de l'anneau d'étalonnage (330) ;
obtenir (883) des mesures du au moins un bras de compas (206) d'au moins l'un de la pluralité d'échelons ; et
corréler (884) des mesures du compas (305) avec un diamètre connu de la pluralité d'échelons.

15. Procédé selon la revendication 14, comprenant en outre l'étape consistant à obtenir une mesure de référence à un emplacement de surface.

16. Procédé selon la revendication 14 ou 15, comprenant en outre l'étape consistant à ajuster une température de l'outil de fond (302).

17. Procédé selon l'une quelconque des revendications 14 à 16, comprenant en outre l'étape consistant à réaliser l'obtention des mesures avant et/ou après avoir déployé l'outil de fond (302) dans le trou foré (101, 201).

18. Procédé selon l'une quelconque des revendications 14 à 17, comprenant en outre l'étape consistant à ajuster le compas (305) en fonction de la corrélation.

19. Procédé selon l'une quelconque des revendications 14 à 18, comprenant en outre l'étape consistant à analyser les mesures.
